# EUROPEAN PATENT SPECIFICATION

(11) **EP 2 707 969 B1**
(45) Date of publication and mention of the grant of the patent: **28.11.2018**
(21) Application number: 12810862.8
(22) Date of filing: 11.07.2012
(51) Int. Cl.: H04W 76/14, H04W 4/08, H04W 72/12, H04W 76/40

(54) **SYSTEM AND METHOD FOR DIRECT MULTI-USER TRANSMISSION**
SYSTEM UND VERFAHREN FÜR EINE DIREKTE MEHRBENUTZERÜBERTRAGUNG
SYSTÈME ET PROCÉDÉ POUR LA TRANSMISSION DIRECTE MULTI-UTILISATEURS

(30) Priority: 12.07.2011 US 201161506984 P; 15.07.2011 US 201161508499 P; 11.07.2012 US 201213546856
(43) Date of publication of application: 19.03.2014
(73) Proprietor: Huawei Technologies Co., Ltd., Longgang District Shenzhen, Guangdong 518129 (CN)
(72) Inventor: ABOUL-MAGD, Osama, Kanata, Ontario K2M-2K2 (CA); CALCEV, George, Hoffman Estates, Illinois 60192 (US); CHEN, Bin, Shenzhen, Guangdong 518129 (CN)
(74) Representative: Maiwald Patent- und Rechtsanwaltsgesellschaft mbH
(86) International application number: PCT/US2012/046295
(87) International publication number: WO 2013/009902

(56) References cited:
- US-A1- 2002 085 508
- US-A1- 2006 031 527
- US-A1- 2007 217 415
- US-A1- 2008 070 522
- US-A1- 2009 190 757
- US-A1- 2010 240 347
- US-A1- 2010 309 834
- US-A1- 2010 311 459
- US-A1- 2011 149 822
- US-A1- 2011 149 822
- ROBERT STACEY (INTEL): "Resolutions for CIDs 1230 etc. ; 11-11-0510-01-00ac-resolutions-for-cids-12 30-etc", IEEE SA MENTOR; 11-11-0510-01-00AC-RESOLUTIONS-FOR-CIDS-12 30-ETC, IEEE-SA MENTOR, PISCATAWAY, NJ USA, vol. 802.11ac, no. 1, 21 April 2011 (2011-04-21), pages 1-10, XP068036149,
- "IEEE P802.11ac/D0.2 Amendment 5: Enhancements for Very High throughput for Operation in Bands below 6 GHz", DRAFT STANDARD FORINFORMATION TECHNOLOGY-TELECOMMUNICATIONS AND INFORMATION EXCHANGE BETWEEN SYSTEMS-LOCAL AND METROPOLITAN AREA NETWORKS-SPECIFIC REQUIREMENTSPART 11: WIRELESS LAN MEDIUM ACCESS CONTROL (MAC) AND PHYSICAL LAYER (PHY) SPECIFICATIONS, 14 March 2011 (2011-03-14), XP055029328,

## Description

### TECHNICAL FIELD

The present disclosure relates generally to digital communications, and more particularly to a system and method for direct multi-user transmission.

### BACKGROUND

Wi-Fi is a wireless standard for connecting electronic devices. Wi-Fi may also be known as IEEE 802.11. Generally, a Wi-Fi enabled device (also commonly referred to as a station), such as a personal computer, a tablet, a personal digital assistant, a video game console, a television, a smartphone, a digital media player, and the like may connect to a service provider when it is within range of a Wi-Fi network connected to the service provider. A typical access point (also commonly known as a hotspot) usually has a range on the order of 10s of meters when indoors and a greater range outdoors. Multiple overlapping access points may be used to provide coverage over larger areas.

US 2011/149 822 A1 describes a wireless network where the wireless stations are divided into groups and the access point aggregates transmissions to multiple stations (broadcast transmissions to all stations and unicast transmissions to individual stations) into one single transmission. Up-front information is provided at the beginning of this one single transmission so that stations can quickly decide whether part of this transmission is destined to them and they need to capture and decode this transmission.

### SUMMARY OF THE INVENTION

The invention is defined by the independent claims.

The embodiments and/or examples of the following description which are not covered by the appended claims are considered as not being part of the present invention.

Example embodiments of the present disclosure which provide a system and method for direct multi-user transmission.

In accordance with an example embodiment of the present disclosure, a method for transmitting to a plurality of responder stations is provided. The method includes configuring, by an initiator station associated with an access point, a first responder station associated with said access point for direct link communications, with a first group identifier and a first position of the first responder station in said first group, by:
transmitting a TDLS setup request message including the first group identifier and the first position from the initiator station to the first responder station, and
if the first group identifier and the first position are not already reserved for use by the first responder station, accepting, by the first responder station, the first group identifier and the first position, and transmitting a first TDLS setup response message including the first group identifier and the first position from the first responder station to the initiator station. The method also includes configuring, by the initiator station, a second responder station associated with said access point for direct link communications, with a second group identifier and a second position of the second responder station in said second group. The method further includes transmitting, by the initiator station, to both the first responder station and the second responder station in a first single transmission by means of said direct link communications, the first single transmission includes first information for the first responder station and second information for the second responder station, where the first information is labeled with the first group identifier and located in a first network resource corresponding to the first position, and the second information is labeled with the second group identifier and located in a second network resource corresponding to the second position.

In accordance with another example embodiment of the present disclosure, a method for receiving a first single transmission is provided. The method includes receiving, by a first responder station associated with an access point, a TDLS setup request message including a first group identifier and a first position of the first responder station in said first group from an initiator station associated with said access point to configure direct link communications with said initiator station, and if the first group identifier and the first position are not already reserved for use by the first responder station: accepting the first group identifier and the first position, and transmitting to the initiator station, by the first responder station, a first TDLS setup response message including the first group identifier and the first position. The method also includes receiving, by the first responder station, the first single transmission including first information for the first responder station and second information for a second responder station, the first information labeled with the first group identifier and located in a first network resource corresponding to the first position, by means of said direct link communications.

In accordance with another example embodiment of the present disclosure not presently claimed, a method for receiving a first single transmission is provided. The method includes receiving, by a first responder station associated with an access point, a TDLS setup request message to configure a direct link communications channel with an initiator station associated with said access point, and receiving, by the first responder station, a first TDLS GroupID management frame including a first group identifier and a first position of the first responder station in said first group. The method also includes transmitting, by the first responder station, a first TDLS GroupID management response message including a positive response if the first group identifier and the first position are not already reserved for use by the first responder station. The method further includes receiving, by the first responder station, the first single transmission including first information for the first responder station and second information for a second responder station, the first information labeled with the first group identifier and located in a first network resource corresponding to the first position, by means of said direct link communications.

In accordance with another example embodiment of the present disclosure, an initiator station is provided. The initiator station includes a processor, and a transmitter operatively coupled to the processor. The processor sets up a first responder station, which is associated with the same access point as the initiator station, for direct link communications, the first responder station set up with a first group identifier and a first position of the first responder station in said first group. The processor is configured to:
transmit a TDLS setup request message including the first group identifier and the first position from the initiator station to the first responder station, and
receive a first TDLS setup response message including the first group identifier and the first position from the first responder station if the first group identifier and the first position are not already reserved for use by the first responder station and the first responder station therefore accepts the first group identifier and the first position.
The processor also sets up a second responder station for direct link communications, the second responder station set up with a second group identifier and a second position of the second responder station in said second group. The transmitter transmits to both the first responder station and the second responder station in a first single transmission by means of said direct link communications, the first single transmission includes first information for the first responder station and second information for the second responder station, the first information labeled with the first group identifier and located in a first network resource corresponding to the first position, and the second information labeled with the second group identifier and located in a second network resource corresponding to the second position.

In accordance with another example embodiment of the present disclosure, a first responder station is provided. The first responder station includes a receiver, a transmitter, and a processor operatively coupled to the receiver and to the transmitter. The receiver receives a TDLS setup request message from an initiator station associated with the same access point as the first responder station, to configure direct link communications with this initiator station. The TDLS setup request message includes a first group identifier and a first position of the first responder station in said first group. The transmitter transmits a first setup response message including the first group identifier and the first position if the first group identifier and the first position are not already reserved for use by the first responder station. The processor determines if the first group identifier and the first position are not already reserved for use by the first responder station, and accept the first group identifier and the first position if the first group identifier and the first position are not already reserved for use by the first responder station. The receiver is additionally configured to receive, by means of said direct link communications, a first single transmission including first information for the first responder station and second information for a second responder station, the first information labeled with the first group identifier and located in a first network resource corresponding to the first position.

In accordance with another example embodiment of the present disclosure not presently claimed, a first responder station is provided. The first responder station includes a receiver, a transmitter, and a processor operatively coupled to the receiver and to the transmitter. The receiver receives a TDLS setup request message to configure a direct link communications channel with an initiator station associated with the same access point as the first responder station, and it receives a first TDLS GroupID management frame including a first group identifier and a first position of the first responder station in said first group The transmitter transmits a first TDLS GroupID management response message including a positive response if the first group identifier and the first position are not already reserved for use by the first responder station. The processor determines if the first group identifier and the first position are not already reserved for use by the first responder station. The receiver is additionally configured to receive, by means of said direct link communications channel, a first single transmission including first information for the first responder station and second information for a second responder station, the first information labeled with the first group identifier and located in a first network resource corresponding to the first position.

One advantage of an embodiment is that a single station may directly transmit to multiple other stations without having to transit to an access point, which can reduce latency as well as resource utilization.

A further advantage of an embodiment is that a distributed technique for managing group identifier allocation allows for the management of group identifiers without having to use a centralized management entity.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1a illustrates an example first example communications system according to examples described herein;
Figure 1b illustrates an example second example communications system according to examples described herein;
Figure 2a illustrates an example portion of a communications system, where an establishment of a direct link using DLS and/or a TDLS is highlighted according to examples described herein;
Figure 2b illustrates an example VHT PPDU format according to examples described herein;
Figure 2c illustrates an example message exchange between network entities involved in a TDLS link establishment according to examples described herein;
Figure 3 illustrates an example preamble with built-in support for MU-MIMO according to examples described herein;
Figure 4 illustrates an example frame with built-in support for group identifier management according to examples described herein;
Figure 5 illustrates an example information element according to examples described herein;
Figure 6 illustrates an example TDLS transmission frame according to examples described herein;
Figure 7 illustrates an example communications system wherein a first example configuration of TDLS direct links is highlighted according to example embodiments described herein;
Figure 8 illustrates an example communications system wherein a second example configuration of TDLS direct links is highlighted according to example embodiments described herein;
Figure 9a illustrates a first example flow diagram of operations occurring in an initiator station as the initiator station transmits to a plurality of responder stations according to example embodiments described herein;
Figure 9b illustrates a second example flow diagram of operations occurring in an initiator station as the initiator station transmits to a plurality of responder stations according to example embodiments described herein;
Figure 10a illustrates a first example flow diagram of operations occurring in a responder station as the responder station participates in setting up a TDLS direct link and receives a transmission from an initiator station over the TDLS direct link according to example embodiments described herein;
Figure 10b illustrates a second example flow diagram of operations occurring in a responder station as the responder station participates in setting up a TDLS direct link and receives a transmission from an initiator station over the TDLS direct link according to example embodiments described herein;
Figure 11 illustrates an example flow diagram of operations occurring in an AP as the AP receives and transmits transmissions in establishing a TDLS direct link according to example embodiments described herein;
Figure 12 illustrates an example first communications device according to examples described herein; and
Figure 13 illustrates an example second communications device according to examples described herein.

### DETAILED DESCRIPTION OF ILLUSTRATIVE EMBODIMENTS

The operating of the current examples, example embodiments and the structure thereof are discussed in detail below. It should be appreciated, however, that the present disclosure provides many applicable inventive concepts that can be embodied in a wide variety of specific contexts. The specific embodiments and examples discussed are merely illustrative of specific structures of the disclosure and ways to operate the disclosure, and do not limit the scope of the disclosure.

One embodiment of the disclosure relates to direct multi-user transmission. For example, an initiating station configures a first responder station and a second responder station for direct multi-user transmission by transmitting setup request messages to them. The setup request messages include group identifier information and position information for the two responder stations. The initiating station transmits to both the first responder station and the second responder station in a single message with information intended for two responder stations labeled by their respective group identifiers and in locations according to their respective position information. For example, a first responder station receives a setup request message that includes group identifier information and location information for the first responder station. The first responder station replies with a setup response message that includes the group identifier information and the location information if the group identifier information and the location information are not already reserved. The first responder station receives a single transmission that includes information intended for it, as well as information intended for a second responder station. The information intended for the first responder station is labeled with the group identifier information and located in the position.

The present disclosure will be described with respect to examples in a specific context, namely an IEEE 802.11 compliant communications system that supports multi-user communications. The disclosure may also be applied, however, to other standards compliant and non-standards compliant communications systems that support multi-user communications.

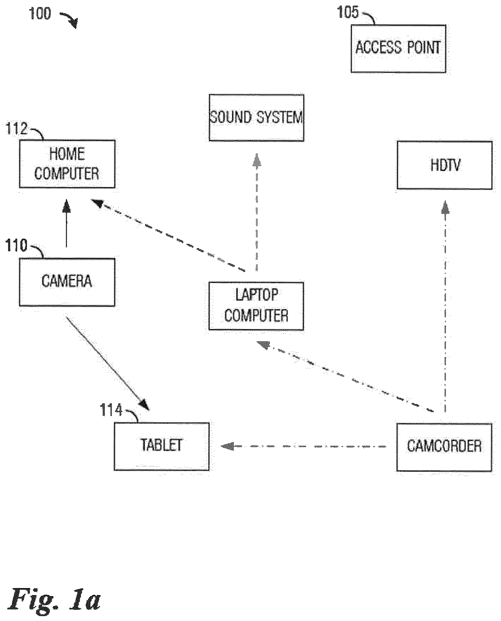

Figure 1a illustrates a first example communications system 100. Communications system 100 may include a plurality of Wi-Fi enabled devices, also commonly referred to as stations or STA, that are capable of communicating with one another through an access point (AP) 105. Typically, a first station, such as a camera 110 may communicate with a second station, such as a home computer 112, and/or a third station, such as a tablet 114, by transmitting to AP 105, which in turn transmits to the second station or the third station. It is noted that the transmission to AP 105 and from AP 105 are not shown in Figure 1a.

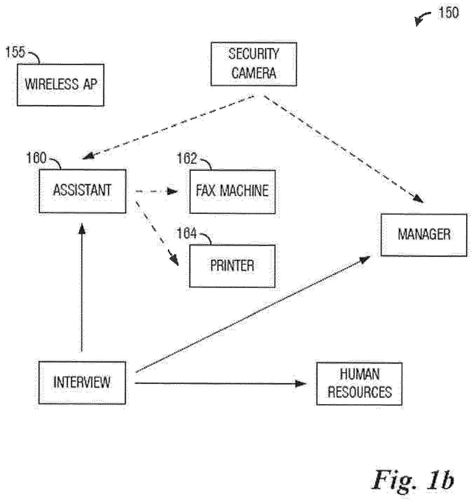

Figure 1b illustrates a second example communications system 150. Communications system 150 may include a plurality of stations that are capable of communicating with one another through an AP 155. As an example, a computer used by assistant 160 may communicate with a fax machine 162 and a printer 164. It is noted that the transmission to AP 155 and from AP 155 are not shown in Figure 1b.

In general, communicating through an AP, such as AP 105 and AP 155, adds additional messaging latency due to the extra transmission. In other words, the extra transmission between the first station and the AP and then from the AP to the second station, for example, may increase the messaging latency when compared to a direct transmission between the first station and the second station. Therefore, for some forms of communications, such as latency sensitive communications, high data throughput communications, and the like, the extra messaging latency may negatively impact the performance.

Direct Link Setup (DLS) and Tunnel DLS (TDLS) are two IEEE 802.11 protocols that allow a station (referred to as an initiator station or initiator STA) to establish a direct link between itself and another station (referred to as a responder station or responder STA). In DLS and TDLS, the initiator station establishes the direct link with the responder station by transmitting to the responder station through an AP.

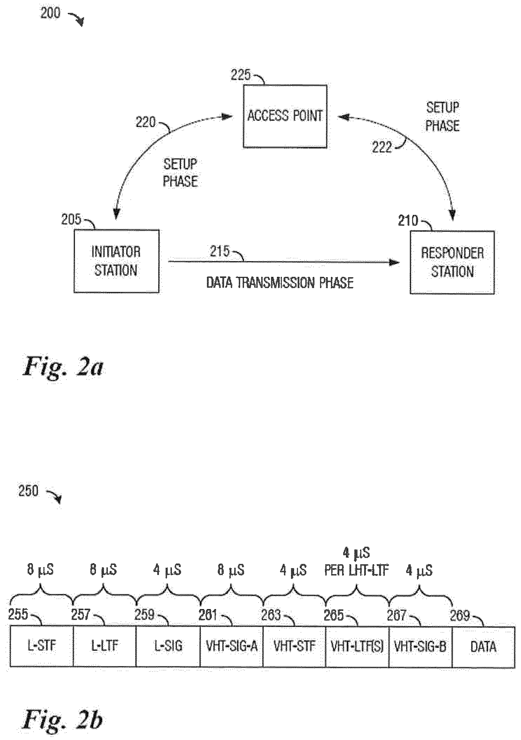

Figure 2a illustrates a portion of a communications system 200, where an establishment of a direct link using DLS and/or a TDLS is highlighted. Communications system 200 includes an initiator station 205 and a responder station 210. Initiator station 205 is to transmit information, such as data, media, and the like, to responder station 210 through a direct link 215.

Establishing direct link 215 between initiator station 205 and responder station 210 includes a setup phase that includes an exchange of control information (using transmissions 220 and 222, for example) to configure direct link 215. In the setup phase, the control information exchanged between initiator station 205 and responder station 210 flows through an
AP 225. In other words, in order to transmit the control information to responder station 210, initiator station 205 transmits the control information to AP 225, which then transmits the control information to responder station 210, and vice versa.

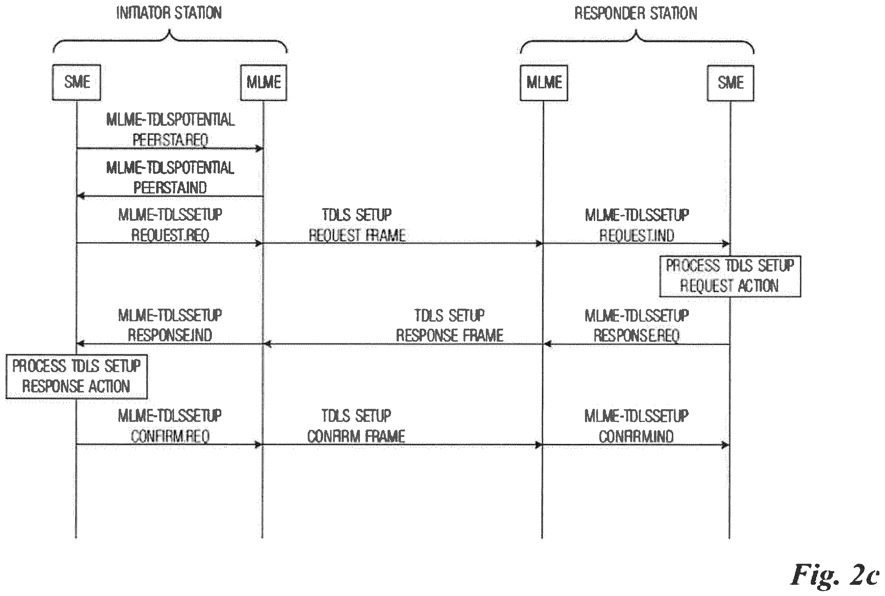

Figure 2b illustrates an example very high throughput (VHT) protocol data unit (PPDU) format 250. VHT PPDU includes a legacy short training field (L-STF) 255, a legacy long training field (L-LTF) 257, a legacy signal (L-SIG) field 259, a VHT signal A (VHT-SIG-A) field 261, a VHT short training field (VHT-STF) 263, one or more VHT long training fields (VHT-LTF) 265, a VHT signal B (VHT-SIG-B) field 267, and a data field 269. Figure 2c illustrates a message exchange between entities involved in a TDLS link establishment. As shown in Figure 2c, the message exchange involves messages exchanged between an initiator station and a responder station (which is also commonly referred to as a peer station), and entities within the two stations, including a station management entity (SME) and a MAC sublayer management entity (MLME). Referring back now to Figure 2a, with direct link 215 is established in the setup phase, initiator 205 may use it to transmit to responder 210 in a data transmission phase.

As an example, in TDLS control information transmitted in action management frames may be used to set up a direct link between two stations. The action frames may be used in a discovery phase where an initiator station may discover a responder station to which it is to communicate. The action frames may also be used in a TDLS Setup Request message used by the initiator station to configure the responder station, a TDLS Setup Response message used by the responder station to respond to the TDLS Setup Request message from the initiator station, a TDLS Confirm message that confirms the establishment of the direct link, and a TDLS Teardown message used by the initiator station to tear down the direct link.

Once the direct link is established, transmissions over the direct link may be labeled to identify them from other transmissions, such as transmissions to an AP or from an AP. As an example, TDLS data frames may be identified by setting flags "ToDS" and "FromDS" to specific values, e.g., binary 0. Table 1 illustrates possible values for flags ToDS and FromDS and example meanings of the flags.

**Table 1: ToDS and FromDS values and meanings.**

| TO DS AND FROM DS VALUES | MEANING |
|---|---|
| TO DS = 0 | A data frame direct from one station to another station within the same Independent Basic Service Set (IBSS), a data frame direct from one station to another station within the same Basic Service Set (BSS), or a data frame outside the context of a BSS, as well as all management and control frames |
| FROM DS = 0 | |
| TO DS = 1 | A data frame destined for the Distribution System (DS) or being sent by a station associated with an AP to the Port access entity in that AP |
| FROM DS = 0 | |
| TO DS = 0 | A data frame exiting the DS or being sent by the port access entity in an AP |
| FROM DS = 1 | |
| TO DS = 1 | A data frame using the four-address format. This standard does not define procedures for using this combination of field values |
| FROM DS = 1 | |

Multi-user multiple input, multiple output (MU-MIMO) allows a single device, such as an AP or a station, to transmit multiple independent spatial streams using multiple transmit antennas. In general, in a device with N transmit antennas, up to N independent spatial streams may be transmitted with each of the N transmit antennas being used to transmit one independent spatial stream, where N is a positive integer value. The N independent spatial streams may be directed to a single device or multiple devices.

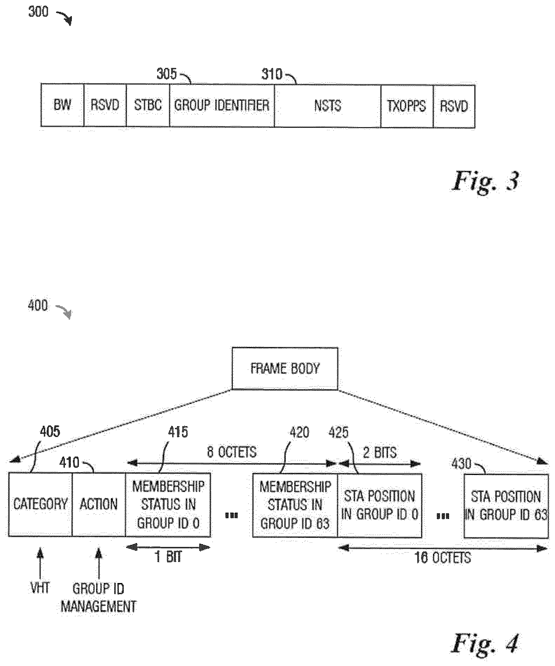

Figure 3 illustrates a preamble 300 with built-in support for MU-MIMO. As shown in Figure 3, preamble 300 includes fields for supporting MU-MIMO. The fields used for supporting MU-MIMO include a group identifier field 305 and a number of spatial streams (NSTS) field 310. As an example, in a IEEE 802.11ac very high throughput (VHT) preamble, group identifier field 305 may be a 6-bit field that is sufficient to identify up to 64 groups (e.g., by a group identifier). The group identifier may define group membership, as well as order in downlink multi-user transmission. It is noted that group identifier zero (0) is reserved for station to AP transmission, while group identifier 63 is reserved for downlink single user transmissions. NSTS field 310 may be representative of a number of independent spatial streams for each member station of a particular group identifier. As an example, NSTS field 310 may indicate a number of independent spatial streams for each member station of a group identified in group identifier field 305.

Generally, one or two bits may be sufficient for NSTS field 310, however, a larger number of bits may be used in a situation where a large number of independent spatial streams is assigned to each member station. It is noted that if there are multiple groups of stations, there may be multiple group identifier fields and multiple NSTS fields. The multiple group identifier fields and multiple NSTS fields may be transmitted in separate preambles, combined in a single preamble, or a combination thereof.

Figure 4 illustrates a frame 400 with built-in support for group identifier management. As shown in Figure 4, frame 400 may be used to manage group identifiers in a Basic Service Set (BSS). Frame 400 may be transmitted to a single station to indicate the station's membership in specific groups. In addition to indicating which groups the station belongs to, frame 400 may indicate the station's position in each of the groups.

As an example, in IEEE 802.11ac, group identifier management may be included in a group identifier management frame. Frame 400 may include a category field 405 that indicates a frame category, such as VHT. Frame 400 may also include an action field 410 that indicates a frame type, such as group identifier management.

Frame 400 also includes a plurality of group identifier membership status fields, such as membership status field 415 and membership status field 420. As an example, each membership status field may be a single bit in length, therefore, for the 64 possible group identifiers, the plurality of group identifier membership status fields may occupy a total of 8 octets (bytes).

Frame 400 also includes a plurality of station position fields, such as station position field 425 and station position field 430. As an example, each group may include up to four stations, one station per position. Hence, two bits may be sufficient to represent the possible position of a station within a group. With two bits per station position field, the plurality of station position fields may occupy a total of 16 octets or bytes.

As an illustrative example, considering a situation where a station is a member of groups having group identifiers 1, 4, and 10, with positions 0, 0, and 3 within the respective groups, then a frame transmitted to the station may have bits of membership status fields of group identifiers 1, 4, and 10 set to a binary 1 and bits of station position fields corresponding to the group identifiers set to binary 00, 00, and 11, respectively.

It may be possible to extend a direct link to allow an initiator station to simultaneously transmit to multiple responder stations by using MU-MIMO. Such a link may be referred to as a TDLS direct link. It is noted that DLS as well as other protocols may be used to support a direct link that allows an initiator station to simultaneously transmit to multiple responder stations. Without loss of generality, direct links configured using DLS and the other protocols may also be referred to as TDLS direct links. The N transmit antennas combined with a direct link may allow for simultaneous transmissions to up to N responder stations. It is noted that if multiple independent spatial streams are sent to a single responder station, the number of responder stations receiving the N independent spatial streams will be smaller than N.

An information element may be added to TDLS messages (as well as DLS messages and other protocols that may be used to configure direct links) to enable the management (e.g., configuration and tear down) of direct links between an initiator station and one or more responder stations that will be utilizing the direct links. The information element may be added to TDLS Setup Request messages, TDLS Setup Response messages, TDLS Confirm messages, TDLS Teardown messages, and the like, to manage direct links. It is noted that the information element may be added to DLS messages, as well as messages of other protocols that are used to manage direct links.

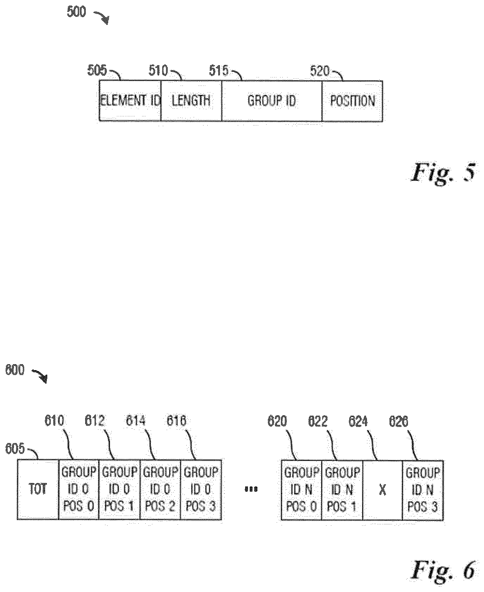

Figure 5 illustrates an information element 500. Information element 500 may include an element identifier 505 that is used to distinguish information element 500 from other types of information elements. It is noted that multiple instances of information element 500 may have the same value in its element identifier 505. Information element 500 may also include a length 510 that indicates a number of information elements comprising information element 500. As an example, length 510 may be set to 1, indicating that information element 500 comprises a single information element.

Information element 500 may also include a group identifier 515 that indicates a group identifier for a responder station and a position 520 that indicates a position within a group corresponding to the group identifier for the responder station. It is noted that for IEEE 802.11ac compliant communications systems, group identifier 515 may be a 6-bit value to accommodate the 64 possible group identifiers, and position 520 may be a 2-bit value to accommodate the four possible positions within a single group. As an example, in a TDLS Setup Request message, group identifier 515 may include a proposed group identifier for the responder station and position 520 may include a proposed position in a group corresponding to the proposed group identifier. Similarly, in a TDLS Setup Response message, group identifier 515 may include a proposed group identifier for the responder station and position 520 may include a proposed position in a group corresponding to the proposed group identifier, as in a TDLS Setup Request message. However, it may be possible that in a TDLS Setup Response message, group identifier 515 may include an alternate group identifier for the responder station and position 520 may include an alternate position in a group corresponding to the alternate group identifier.

Figure 6 illustrates a TDLS transmission frame 600. TDLS transmission frame 600 may be transmitted by an initiator station to a plurality of responder stations. TDLS transmission frame 600 may include a Type of Transmission (TOT) field 605 to indicate transmission type, e.g., a downlink MU-MIMO transmission from an AP to multiple stations or a TDLS MU-MIMO direct link transmission from an initiator station to multiple responder stations. For example, TOT field 605 may be a 1-bit field. It is noted that strictly speaking, TOT field 605 may not be required due to the use of ToDS and FromDS bits to distinguish TDLS frames at a media access control (MAC) layer. However, the inclusion of TOT field 605 provides advantages such as faster recognition of the transmission type at a physical (PHY) layer, and stations not engaged in TDLS communications may be able to enter power savings mode when detecting messages with TOT fields set to indicate TDLS MU-MIMO direct link transmissions. Additionally, TOT field 605 may be extended to indicate other transmission types with the addition of extra bits, such as mesh transmission, and the like. The management of group identifier for TDLS direct link transmissions and normal transmissions may be achieved with different management processes, determined by the value of TOT field 605.

According to an alternative example, one or more bits in VHT-SIG-A field, such as VHT-SIG-A field 261, of a VHT PPDU may be used to distinguish between AP and station originator of a TDLS transmission. As an example, if the one or more bits in the VHT-SIG-A field is set to a first value, then the AP may be the originator of the TDLS transmission, while if the one or more bits in the VHT-SIG-A field is set to a second value, then the station may be the originator of the TDLS transmission. As an example, bits 13-21 of a VHT PPDU may contain one or more bits to distinguish between AP and/or station originator of a TDLS transmission.

According to another alternative example, an originator address and a group identifier may be used to determine the source of a station originator of a TDLS transmission. As an example, target destinations of the TDLS transmission associate the group identifier with a base station identifier and the originator address to distinguish between multiple TDLS transmissions. The association between the group identifier and the base station identifier and the originator address may be retained for as long as the TDLS link remains active.

TDLS transmission frame 600 may also include information intended for the various responder stations participating in TDLS direct link operation. As shown in Figure 6, the information intended for the various responder stations may be organized by group identifier and position. As an example, consider a situation wherein there are four responder stations for a group corresponding to group identifier zero (0). Then, the information for each of the four responder stations may be transmitted in network resources, such as time slots, frequency slots, or time-frequency slots, corresponding positions 0, 1, 2, and 3 (shown as blocks 610, 612, 614, and 616). As another example, consider a situation wherein there are three responder stations for a group corresponding to group identifier N with the responder stations located in positions 0, 1, and 3. Then, the information for each of the three responder may be transmitted in network resources, such as time slots, frequency slots, or time-frequency slots, corresponding positions 0, 1, and 3 (shown as blocks 620, 622, and 626).

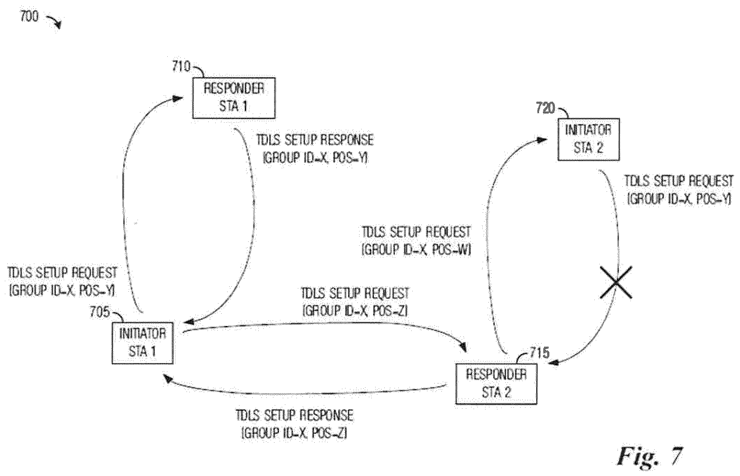

Figure 7 illustrates a communications system 700 wherein a first example configuration of TDLS direct links is highlighted. Communications system 700 includes a first initiator station (INITIATOR STA 1) 705, a first responder station (RESPONDER STA 1) 710, a second responder station (RESPONDER STA 2) 715, and a second initiator station (INITIATOR STA 2) 720, with first initiator station 705 attempting to configure a TDLS direct link with first responder station 710 and second responder station 715 and second initiator station 720 attempting to configure a TDLS direct link with second responder station 715. It is noted that the initiator stations (i.e., first initiator station 705 and second initiator station 720) may also have TDLS direct links with other responder stations not shown in Figure 7. It is also noted that communications system 700, as shown in Figure 7, does not include an AP. However, the messages sent in establishing a TDLS direct link are actually sent through an AP. Regardless, the AP and messages sent to and from the AP are omitted to maintain simplicity in Figure 7.

First initiator station 705 begins by transmitting a TDLS Setup Request message to first responder station 710 with an information element, such as information element 500, including group identifier X and position Y. For discussion purposes, consider a situation wherein first responder station 710 accepts group identifier X and position Y. First responder station 710 sends a TDLS Setup Response message to first initiator station 705 with an information element including group identifier X and position Y. First responder station 710 is now configured for TDLS direct link operation with first initiator station 705.

First initiator station 705 begins by transmitting a TDLS Setup Request message to second responder station 715 with an information element including group identifier X and position Z. It is noted that the group identifier for second responder station 715 does not necessarily need to be the same as the group identifier for first responder station 710. For discussion purposes, consider a situation wherein second responder station 715 accepts group identifier X and position Z. Second responder station 715 may send a TDLS Setup Response message to first initiator station 705 with an information element including group identifier X and position Z. Second responder station 715 is now configured for TDLS direct link operation with first initiator station 705.

Second initiator station 720 may transmit a TDLS Setup Request message to second responder station 715 with an information element including group identifier X and position Y. It is noted that the group identifier for second responder station 715 does not necessarily need to be the same as the group identifier for first responder station 710. For discussion purpose, considering a situation wherein second responder station 715 has already accepted group identifier X and position Y with first initiator station 705. Hence, there is a conflict in group identifiers (i.e., X) and position (i.e., Y). Therefore, second responder station 715 may not be able to distinguish transmissions from first initiator station 705 and second initiator station 720 associated with group identifier X and position Y. Second responder station 715 may then reject the proposed group identifier X and position Y. Instead, second responder station 715 selects an alternative group identifier X and alternative position W. It is noted that the alternative group identifier does not need to be the same as the group identifier proposed by second initiator station 720, nor does the alternative position.

If second initiator station 720 accepts the alternative group identifier and the alternative position, then the second responder station 715 may now be configured for TDLS direct link operation with second initiator station 720. If second initiator station 720 does not accept the alternative group identifier and the alternative position, then second initiator station 720 may select another group identifier and another position and transmit another TDLS Setup Request message to second responder station 715. The TDLS Setup Request message and the TDLS Setup Response message pair may continue until the TDLS direct link is setup or second initiator station 720 stops attempting to configure second responder station 715.

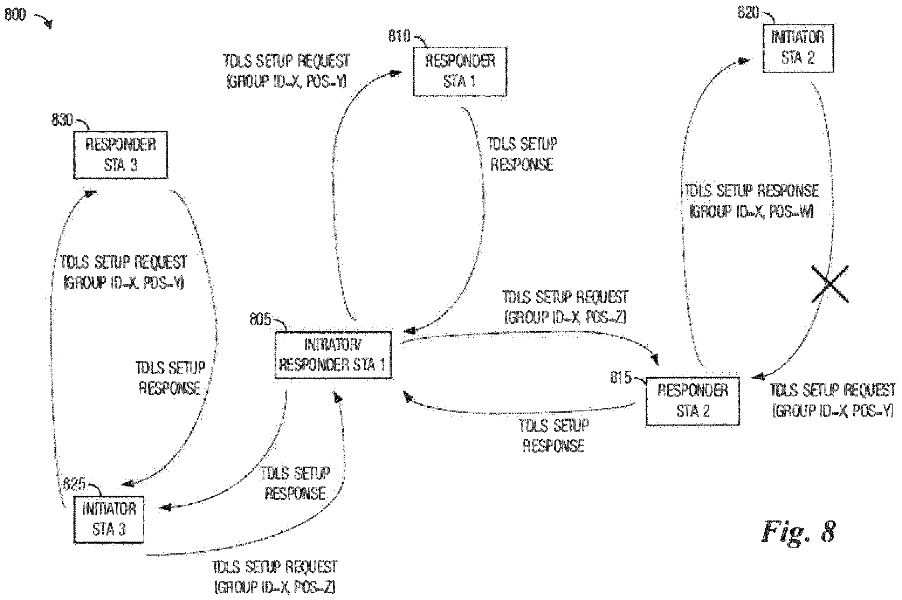

Figure 8 illustrates a communications system 800 wherein a second example configuration of TDLS direct links is highlighted. Communications system 800 includes a first initiator/responder station (INITIATOR/RESPONDER STA 1) 805, a first responder station (RESPONDER STA 1) 810, a second responder station (RESPONDER STA 2) 815, a second initiator station (INITIATOR STA 2) 820, a third initiator station (INITIATOR STA 3) 825, and a third responder station (RESPONDER STA 3) 830, with first initiator/responder station 805 attempting to configure a TDLS direct link with first responder station 810 and second responder station 815, second initiator station 820 attempting to configure a TDLS direct link with second responder station 815, and third initiator station 825 attempting to configure a TDLS direct link with third responder station 830 and first initiator/responder station 805. It is noted that the initiator stations (i.e., first initiator/responder station 805, second initiator station 820, and third initiator station 825) may also have TDLS direct links with other responder stations not shown in Figure 8. It is noted that the TDLS Setup Response messages shown in Figure 8 do not include the contents of the information element. It is also noted that communications system 800, as shown in Figure 8, does not include an AP. However, the messages sent in establishing a TDLS direct link are actually sent through an AP. Regardless, the AP and messages sent to and from the AP are omitted to maintain simplicity in Figure 8.

First initiator/responder station 805 begins by transmitting a TDLS Setup Request message to first responder station 810 with an information element including group identifier X and position Y. For discussion purposes, consider a situation wherein first responder station 810 accepts group identifier X and position Y. First responder station 810 sends a TDLS Setup Response message to first initiator/responder station 805 with an information element including group identifier X and position Y. First responder station 810 is now configured for TDLS direct link operation with first initiator/responder station 805.

First initiator/responder station 805 begins by transmitting a TDLS Setup Request message to second responder station 815 with an information element including group identifier X and position Z. It is noted that the group identifier for second responder station 815 does not necessarily need to be the same as the group identifier for first responder station 810. For discussion purposes, consider a situation wherein second responder station 815 accepts group identifier X and position Z. Second responder station 815 sends a TDLS Setup Response message to first initiator/responder station 805 with an information element including group identifier X and position Z. Second responder station 815 is now configured for TDLS direct link operation with first initiator/responder station 805.

Second initiator station 820 may transmit a TDLS Setup Request message to second responder station 815 with an information element including group identifier X and position Y. It is noted that the group identifier for second responder station 815 does not necessarily need to be the same as the group identifier for first responder station 810. For discussion purposes, consider a situation wherein second responder station 815 has already accepted group identifier X and position Y with first initiator/responder station 805. Hence, there is a conflict in group identifiers (i.e., X) and position (i.e., Y). Therefore, second responder station 815 may not be able to distinguish transmissions from first initiator/responder station 805 and second initiator station 820 associated with group identifier X and position Y. Second responder station 815 may then reject the proposed group identifier X and position Y. Instead, second responder station 815 selects an alternative group identifier X and alternative position W. It is noted that the alternative group identifier does not need to be the same as the group identifier proposed by second initiator station 820, nor does the alternative position.

If second initiator station 820 accepts the alternative group identifier and the alternative position, then the second responder station 815 may now be configured for TDLS direct link operation with second initiator station 820. If second initiator station 820 does not accept the alternative group identifier and the alternative position, then second initiator station 820 may select another group identifier and another position and transmit another TDLS Setup Request message to second responder station 815. The TDLS Setup Request message and the TDLS Setup Response message pair may continue until the TDLS direct link is setup or second initiator station 820 stops attempting to configure second responder station 815.

Third initiator station 825 may transmit a TDLS Setup Request message to third responder station 830 with an information element including group identifier X and position Y. For discussion purposes, consider a situation wherein third responder station 830 accepts group identifier X and position Y. It is noted that although communications system 800 already includes another TDLS direct link with the same group identifier and position (between first initiator/responder station 805 and first responder station 810), the initiator stations and/or the responder stations involved in the two TDLS direct links are disjointed, so there is no conflict in using the same group identifier and/or position. Third responder station 830 may send a TDLS Setup Response message to third initiator station 825 with an information element including group identifier X and position Y. Third responder station 830 may now be configured for TDLS direct link operation with third initiator station 825.

Third initiator station 825 may transmit a TDLS Setup Request message to first initiator/responder station 805 with an information element including group identifier X and position Z. For discussion purposes, consider a situation wherein first initiator/responder station 805 accepts group identifier X and position Z. It is noted that although communications system 800 already includes another TDLS direct link with the same group identifier and position (between first initiator/responder station 805 and second responder station 815), the initiator stations and/or the responder stations involved in the two TDLS direct links are disjointed, so there is no conflict in using the same group identifier and/or position. First initiator/responder station 805 may send a TDLS Setup Response message to third initiator station 825 with an information element including group identifier X and position Z. First initiator/responder station 805 may now be configured for TDLS direct link operation with third initiator station 825.

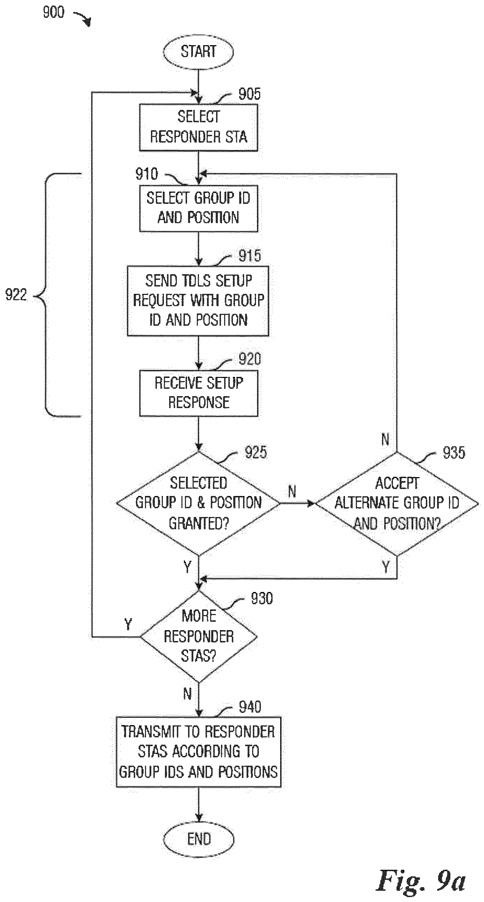

Figure 9a illustrates a first flow diagram of operations 900 occurring in an initiator station as the initiator station transmits to a plurality of responder stations. Operations 900 may be indicative of operations occurring in an initiator station, such as first initiator station 705 and second initiator station 720 of Figure 7, as the initiator stations transmit to a plurality of responder stations.

Operations 900 may begin with the initiator station selecting a responder station (block 905). In general, the TDLS direct link permits the initiator station to simultaneously transmit to a plurality responder stations. However, the initiator station may need to configure the responder stations one at a time. As an example, the initiator station may randomly select the responder station from the plurality of responder stations. As another example, the initiator station may select the responder station in order of a ranking of the plurality of responder stations, such as amount of information to send to the responder stations, responder station priority, information priority, quality of service restrictions, and the like.

The initiator station may select a group identifier and a position for the selected responder station (block 910). The initiator station may select the group identifier and the position for the selected responder station according to selection criteria such as available group identifiers, available positions, previously selected group identifiers, previously selected positions, conflicting group identifiers, conflicting positions, and the like. As an example, if there is a previously selected group identifier with one or more available positions, the initiator station may select the same group identifier and one of the available positions for the selected responder station. As another example, if the initiator station intends to include 4 or fewer responder stations in the TDLS direct link, the initiator station may elect to select a single group identifier for all of the responder stations in order to simplify group identifier management.

The initiator station transmits a TDLS Setup Request message to the selected responder station with an information element that includes the selected group identifier and the selected position (block 915). As discussed previously, the TDLS Setup Request message is sent to the responder station by way of an AP. The initiator station receives a TDLS Setup Response message with an information element that includes a response group identifier and a response position (block 920). As discussed previously, the TDLS Setup Response message is sent from the responder station by way of the AP. Collectively, blocks 910, 915, and 920 may be referred to as configuring (or setting up) responder stations (shown as highlight 922), which occur during a setup phase as shown in Figure 2a.

The initiator station may perform a check to determine if the selected group identifier and the selected position were accepted (block 925). The selected group identifier and the selected position were accepted if the selected group identifier and the selected position are equal to the response group identifier and the response position. If the selected group identifier and the selected position were accepted, then the initiator station may perform a check to determine if there are any more responder stations (i.e., all of the responder stations in the plurality of responder stations have been configured) (block 930). If there are more responder stations, then the initiator station may return to block 905 to select another responder station. If there are no more responder stations, then the TDLS direct link is configured and the initiator station may use the TDLS direct link and the group identifiers and positions of the plurality of responder stations to simultaneously transmit to the plurality of responder stations (block 940).

However, if the selected group identifier and/or the selected position are not equal to the response group identifier and/or the response position, then the selected group identifier and/or the selected position were not accepted, then the initiator station may perform a check to determine if it will accept the response group identifier and the response position (block 935). If the initiator station accepts the response group identifier and the response position, then the initiator station may move to block 930 to perform a check to determine if there are more responder stations. If the initiator station does not accept the response group identifier and the response position, then the initiator station may move to block 910 to select another group identifier and/or position to configure the selected responder station.

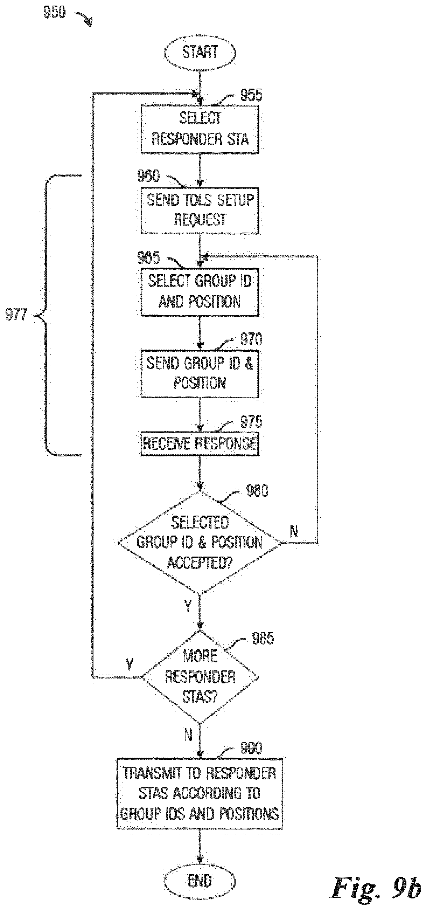

Figure 9b illustrates a second flow diagram of operations 950 occurring in an initiator station as the initiator station transmits to a plurality of responder stations. Operations 950 may be indicative of operations occurring in an initiator station, such as first initiator station 705 and second initiator station 720 of Figure 7, as the initiator stations transmit to a plurality of responder stations.

Operations 950 may begin with the initiator station selecting a responder station (block 955). In general, the TDLS direct link permits the initiator station to simultaneously transmit to a plurality responder stations. However, the initiator station may need to configure the responder stations one at a time. As an example, the initiator station may randomly select the responder station from the plurality of responder stations. As another example, the initiator station may select the responder station in order of a ranking of the plurality of responder stations, such as amount of information to send to the responder stations, responder station priority, information priority, quality of service restrictions, and the like.

The initiator station transmits a TDLS Setup Request message to the selected responder station to configure the TDLS link (block 960). The TDLS Setup Request message establishes the TDLS link between the initiator station and the selected responder station. As discussed previously, the TDLS Setup Request message is sent to the responder station by way of an AP.

The initiator station selects a group identifier and a position for the selected responder station (block 965). The initiator station may select the group identifier and the position for the selected responder station according to selection criteria such as available group identifiers, available positions, previously selected group identifiers, previously selected positions, conflicting group identifiers, conflicting positions, and the like. As an example, if there is a previously selected group identifier with one or more available positions, the initiator station may select the same group identifier and one of the available positions for the selected responder station. As another example, if the initiator station intends to include 4 or fewer responder stations in the TDLS direct link, the initiator station may elect to select a single group identifier for all of the responder stations in order to simplify group identifier management.

The initiator station may send the group identifier and the position to the selected responder station in a frame, e.g., a TDLS Group ID Management frame (block 970). The frame may be similar to group management frames transmitted by an AP. According to an example, the frame may be sent in a message separate from the TDLS Setup Request message. According to an alternative example, the frame may be sent in a piggyback manner with the TDLS Setup Request message sent in block 960 or in a subsequent TDLS Setup Request message addressed to a different responder station or in some other TDLS message.

The initiator station receives a response message (block 975). The response message may be in response to the TDLS Setup Request message and/or the frame. Collectively, blocks 960, 965, 970, and 975 may be referred to as configuring (or setting up) responder stations (shown as highlight 977), which may occur during a setup phase as shown in Figure 2a.

The initiator station may perform a check to determine if the selected group identifier and the selected position were accepted (block 980). As an example, the selected group identifier and the selected position were accepted if the responsive message included a positive or affirmative response. As another example, the selected group identifier and the selected position were accepted if the selected group identifier and the selected position are equal to the response group identifier and the response position included in the response message. If the selected group identifier and the selected position were accepted, then the initiator station may perform a check to determine if there are any more responder stations (i.e., all of the responder stations in the plurality of responder stations have been configured) (block 985). If there are more responder stations, then the initiator station may return to block 955 to select another responder station. If there are no more responder stations, then the TDLS direct link is configured and the initiator station may use the TDLS direct link and the group identifiers and positions of the plurality of responder stations to simultaneously transmit to the plurality of responder stations (block 990).

However, if the response message included a negative response or if the selected group identifier and/or the selected position are not equal to the response group identifier and/or the response position included in the response message, then the initiator station may return to block 965 to select another group identifier and/or position. The initiator station may repeat the selection of the group identifier and/or the position until the selected responder station accepts a group identifier and position or until a failure mechanism (e.g., a timer times out or a counter reaches a specified number of trials) is met. With the failure mechanism met, the initiator station may select another responder station or terminate the configuration of the responder stations if there are no other responder stations.

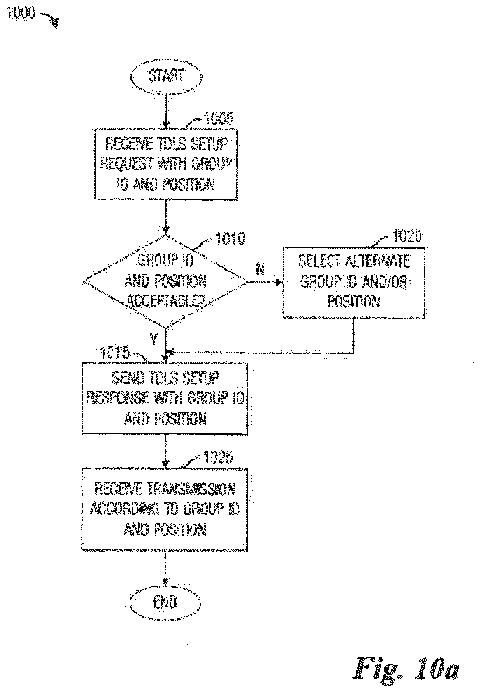

Figure 10a illustrates a first flow diagram of operations 1000 occurring in a responder station as the responder station participates in setting up a TDLS direct link and receives a transmission from an initiator station over the TDLS direct link. Operations 1000 may be indicative of operations occurring in a responder station, such as first responder station 710 and second responder station 715 of Figure 7, as the responder station participates in setting up a TDLS direct link and receives a transmission over the TDLS direct link.

Operations 1000 begin with the responder station receiving a TDLS Setup Request message with an information element including a group identifier and position (block 1005). The TDLS Setup Request message has been sent by an initiator station by way of an AP. The responder station performs a check to determine if the group identifier and the position are acceptable (block 1010). The group identifier and the position are acceptable if there is not already a configured TDLS direct link with the responder station that uses the same group identifier and position. If the group identifier and the position are acceptable, the responder station sends a TDLS Setup Response message to the initiator station with an information element with the group identifier and the position (block 1015). The responder station may then receive a transmission from the initiator station that is labeled with the group identifier and located according to the position (block 1025).

If the group identifier and the position are not acceptable, then the responder station may select an alternate group identifier and/or an alternate position (block 1020). As an example, the responder station may randomly select the alternate group identifier and/or the alternate position. As another example, the responder station may maintain the group identifier and select a different position as the alternate position. The responder station sends a TDLS Setup Response message to the initiator station with an information element with the alternate group identifier and/or the alternate position (block 1015).

It is noted that beamforming is supported in TDLS direct links. Beamforming of individual independent spatial streams may be applied after VHT beamforming is performed. The beamforming of the individual independent spatial streams may make use of null data packet announcement (NDPA) frames as well as sounding poll control frames, for example.

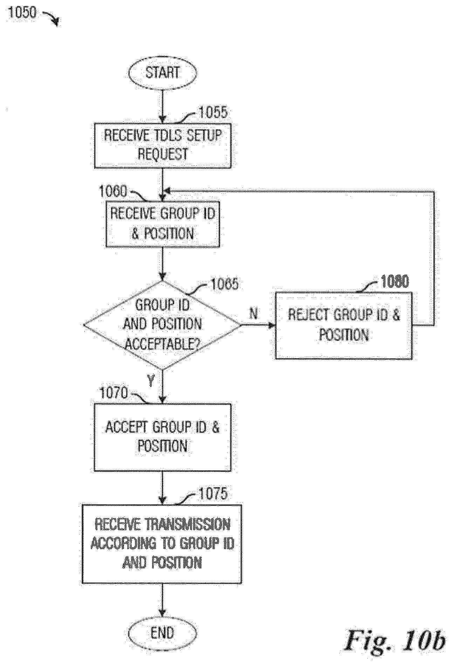

Figure 10b illustrates a second flow diagram of operations 1050 occurring in a responder station as the responder station participates in setting up a TDLS direct link and receives a transmission from an initiator station over the TDLS direct link. Operations 1050 may be indicative of operations occurring in a responder station, such as first responder station 710 and second responder station 715 of Figure 7, as the responder station participates in setting up a TDLS direct link and receives a transmission over the TDLS direct link.

Operations 1050 may begin with the responder station receiving a TDLS Setup Request message (block 1055). The TDLS Setup Request message may have been sent by an initiator station by way of an AP. The responder station may receive a message that includes a group identifier and a position (block 1060). The message may be in the form of a frame, such as a Group Identifier Management frame. The TDLS Setup Request message and the frame may be received in separate transmissions or they may be piggybacked together or they may be separately or together piggybacked with other transmission(s).

The responder station may perform a check to determine if the group identifier and the position are acceptable (block 1065). As an example, the group identifier and the position may be acceptable if there is not already a configured TDLS direct link with the responder station that uses the same group identifier and position. If the group identifier and the position are acceptable, the responder station may send a TDLS Response message to the initiator station with a positive or affirmative response, or the TDLS Response message may include the group identifier and the position (block 1070). The responder station may then receive a transmission from the initiator station that is labeled with the group identifier and located according to the position (block 1075).

If the group identifier and the position are not acceptable, then the responder station may send a TDLS Response message to the initiator station with a negative response, or the TDLS Response message may include a suggested group identifier and position (block 1080). As an example, the responder station may randomly select the alternate group identifier and/or the alternate position. As another example, the responder station may maintain the group identifier and select a different position as the alternate position. The responder station may receive another message, e.g., a frame, which includes a different group identifier and/or position (block 1060). The responder station may perform a check to determine if the group identifier and the position are acceptable (block 1065). The responder station may continue checking the group identifier and the position until it finds one that is acceptable or until the initiator station stops sending messages including group identifiers and positions.

It is noted that beamforming is supported in TDLS direct links. Beamforming of individual independent spatial streams may be applied after VHT beamforming is performed. The beamforming of the individual independent spatial streams may make use of null data packet announcement (NDPA) frames as well as sounding poll control frames, for example.

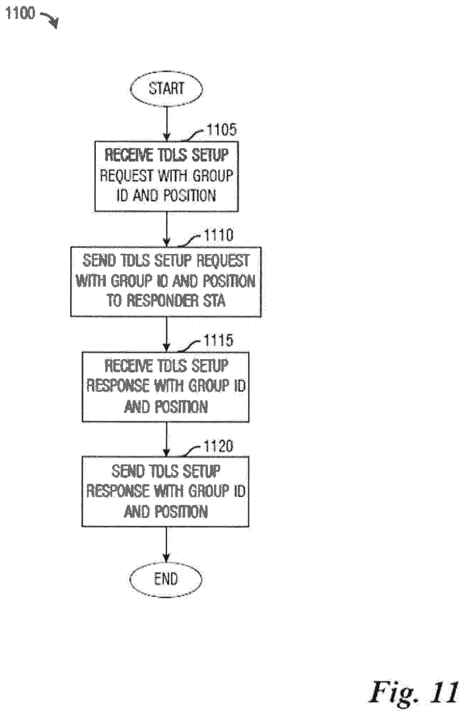

Figure 11 illustrates a flow diagram of operations 1100 occurring in an AP as the AP receives and transmits transmissions in establishing a TDLS direct link. Operations 1100 may be indicative of operations occurring in an AP as the AP receives and transmits transmissions used in establishing a TDLS direct link.

Operations 1100 may begin with the AP receiving a TDLS Setup Request message with an information element including a group identifier and a position from an initiator station (block 1105). The AP may forward the TDLS Setup Request message to a responder station (block 1110). The AP may receive a TDLS Setup Response message with an information element including a response group identifier and a response position from the responder station (block 1115). The AP may forward the TDLS Setup Response message to the initiator station (block 1120).

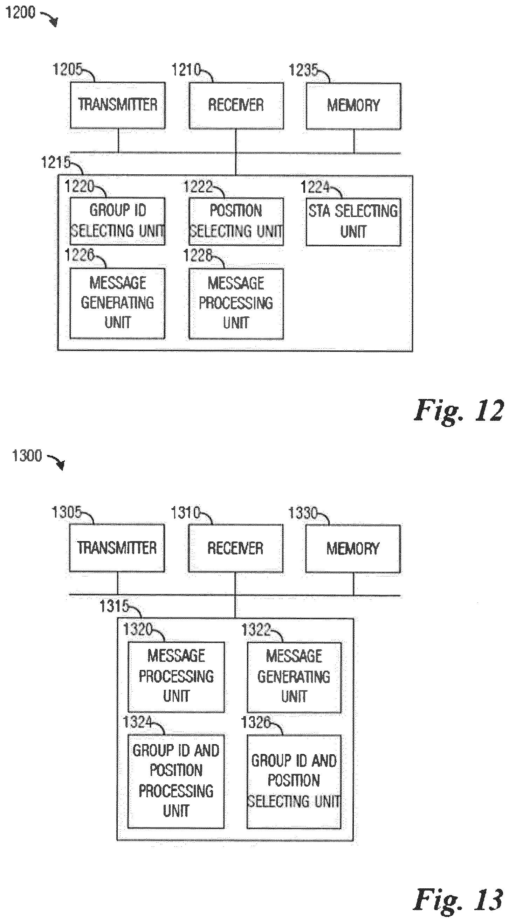

Figure 12 illustrates a diagram of a first communications device 1200. First communications device 1200 may be an implementation of a station, such as an initiator station, of a communications system. First communications device 1200 may be used to implement various ones of the embodiments discussed herein. As shown in Figure 12, a transmitter 1205 is configured to send TDLS Setup Request messages, information to an AP, information to a responder station over a TDLS direct link, and the like, and a receiver 1210 is configured to receive TDLS Setup Response messages, information, and the like. Transmitter 1205 and receiver 1210 may have a wireless interface, a wireline interface, or a combination thereof.

A group identifier selecting unit 1220 is configured to select a group identifier for a responder station. A position selecting unit 1222 is configured to select a position for a responder station in a group. Group identifier selecting unit 1220 and/or position selecting unit 1222 are configured to select the group identifier and/or the position according to a selection criteria such as available group identifiers, available positions, previously selected group identifiers, previously selected positions, conflicting group identifiers, conflicting positions, and the like. A station selecting unit 1224 is configured to select a responder station from a plurality of responder stations for TDLS direct link configuration.

A message generating unit 1226 is configured to generate messages, such as a TDLS Setup Request message to be transmitted to a responder station, the message includes an information element with a group identifier and a position for the responder station. Alternatively, message generating unit 1226 separately generates a TDLS Setup Request message and a message including a TDLS Group ID Management frame that contains a group identifier and a position for the responder station. A message processing unit 1228 is configured to process messages, such as a TDLS Setup Response message and/or a response message. A memory 1235 is configured to store group identifiers, positions, responder stations, TDLS direct link configurations, and the like.

The elements of first communications device 1200 may be implemented as specific hardware logic blocks. In an alternative, the elements of first communications device 1200 may be implemented as software executing in a processor, controller, application specific integrated circuit, or so on. In yet another alternative, the elements of first communications device 1200 may be implemented as a combination of software and/or hardware.

As an example, transmitter 1205 and receiver 1210 may be implemented as a specific hardware block, while group identifier selecting unit 1220, position selecting unit 1222, station selecting unit 1224, message generating unit 1226, and message processing unit 1228 may be software modules executing in a processor 1215, such as a microprocessor, a digital signal processor, a custom circuit, or a custom compiled logic array of a field programmable logic array.

Figure 13 illustrates a diagram of a second communications device 1300. Second communications device 1300 may be an implementation of a station, such as a responder station, of a communications system. Second communications device 1300 may be used to implement various ones of the embodiments discussed herein. As shown in Figure 13, a transmitter 1305 is configured to send TDLS Setup Response messages, information to an AP, and the like, and a receiver 1310 is configured to receive TDLS Setup Request messages, information from an initiator station over a TDLS direct link, and the like. Transmitter 1305 and receiver 1310 may have a wireless interface, a wireline interface, or a combination thereof.

A message processing unit 1320 is configured to process messages, such as a TDLS Setup Request message and/or a message including a TDLS Group ID Management frame. A message generating unit 1322 is configured to generate messages, such as a TDLS Setup Response message and/or a response message. A group identifier and position processing unit 1324 is configured to determine if a group identifier and/or a position provided in an information element of a TDLS Setup Request message or a TDLS Group ID Management frame conflict with existing group identifier and/or position configurations. A group identifier and position selecting unit 1326 is configured to select a group position and/or a position if a group identifier and/or a position provided in an information element of a TDLS Setup Request message or a TDLS Group ID Management frame conflict with existing group identifier and/or position configurations. A memory 1330 is configured to store group identifiers, positions, initiator stations, and the like.

The elements of second communications device 1300 may be implemented as specific hardware logic blocks. In an alternative, the elements of second communications device 1300 may be implemented as software executing in a processor, controller, application specific integrated circuit, or so on. In yet another alternative, the elements of second communications device 1300 may be implemented as a combination of software and/or hardware.

As an example, transmitter 1305 and receiver 1310 may be implemented as a specific hardware block, while message processing unit 1320, message generating unit 1322, group identifier and position processing unit 1324, and group identifier and position selecting unit 1326 may be software modules executing in a processor 1315, such as a microprocessor, a digital signal processor, a custom circuit, or a custom compiled logic array of a field programmable logic array.

## Claims

1. A method for transmitting to a plurality of responder stations (210, 710, 715, 810, 815, 830), the method comprising:
configuring, by an initiator station (205, 705, 720, 805, 820, 825) associated with an access point (225), a first responder station (710, 810) associated with said access point (225) for direct link (215) communications, with a first group identifier (515) and a first position (520) of the first responder station (710, 810) in said first group (515), by:
transmitting a TDLS setup request message including the first group identifier (515) and the first position (520) from the initiator station (205, 705, 720, 805, 820, 825) to the first responder station (710, 810), and
if the first group identifier (515) and the first position (520) are not already reserved for use by the first responder station (710, 810), accepting, by the first responder station (710, 810), the first group identifier (515) and the first position (520), and transmitting a first TDLS setup response message including the first group identifier (515) and the first position (520) from the first responder station (710, 810) to the initiator station (205, 705, 720, 805, 820, 825);
configuring, by the initiator station (205, 705, 720, 805, 820, 825), a second responder station (715, 815) associated with said access point (225) for direct link (215) communications, with a second group identifier (515) and a second position (520) of the second responder station (715, 815) in said second group (515), wherein the method further comprises:
transmitting (940, 990), by the initiator station (205, 705, 720, 805, 820, 825), to both the first responder station (710, 810) and the second responder station (715, 815) in a first single transmission (600) by means of said direct link (215) communications, wherein the first single transmission (600) includes first information for the first responder station (710, 810) and second information for the second responder station (715, 815), wherein the first information is labeled with the first group identifier (515) and located in a first network resource (610-626) corresponding to the first position (520), and the second information is labeled with the second group identifier (515) and located in a second network resource (610-626) corresponding to the second position (520).

2. The method of claim 1, wherein, if the first responder station does not accept the first group identifier and the first position, the first TDLS setup response message comprises a first alternate group identifier (515) and a first alternate position (520), and wherein, if the initiator station does not accept the alternate group identifier and alternate position, the method further comprises prior to transmitting to both the first responder station (710, 810) and the second responder station (715, 815):
selecting by the inititator station a third group identifier (515) and a third position (520) for the first responder station (710, 810);
configuring by the initiator station the first responder station (710, 810) for direct link (215) communications by transmitting, by the initiator station (205, 705, 720, 805, 820, 825), to the first responder station (710, 810), a third TDLS setup request message including the third group identifier (515) and the third position (520), so as to:
replace the first group identifier (515) with the third group identifier (515); and
replace the first position (520) with the third position (520).

3. A method for receiving a first single transmission (600), the method comprising:
receiving (1005), by a first responder station (710, 810) associated with an access point (225), a TDLS setup request message including a first group identifier (515) and a first position (520) of the first responder station (710, 810) in said first group (515) from an initiator station (205, 705, 720, 805, 820, 825) associated with said access point (225) to configure direct link (215) communications with said initiator station (205, 705, 720, 805, 820, 825);
if the first group identifier (515) and the first position (520) are not already reserved for use by the first responder station (710, 810): accepting the first group identifier (515) and the first position (520), and transmitting (1015) to the initiator station (205, 705, 720, 805, 820, 825), by the first responder station (710, 810), a first TDLS setup response message including the first group identifier (515) and the first position (520); wherein the method further comprises:
receiving, by the first responder station (710, 810), the first single transmission (600) including first information for the first responder station and second information for a second responder station (715, 815), the first information labeled with the first group identifier (515) and located in a first network resource (610-626) corresponding to the first position (520), by means of said direct link (215) communications.

4. The method of claim 3, further comprising transmitting a second TDLS setup response message including at least one of an alternate group identifier (515) and an alternate position (520) if the first group identifier (515) and the first position (520) are already reserved for use by the first responder station (710, 810).

5. An initiator station (205, 705, 720, 805, 820, 825) comprising:
a processor configured to setup a first responder station (710, 810) associated with the same access point (225) as the initiator station (205, 705, 720, 805, 820, 825) for direct link (215) communications, the first responder station (710, 810) set up with a first group identifier (515) and a first position (520) of the first responder station (710, 810) in said first group (515), wherein the processor is configured to:
transmit a TDLS setup request message including the first group identifier (515) and the first position (520) from the initiator station (205, 705, 720, 805, 820, 825) to the first responder station (710, 810), and
receive a first TDLS setup response message including the first group identifier (515) and the first position (520) from the first responder station (710, 810) if the first group identifier (515) and the first position (520) are not already reserved for use by the first responder station (710, 810) and the first responder station (710, 810) therefore accepts the first group identifier (515) and the first position (520);
wherein the processor is further configured to setup a second responder station (715, 815) associated with said access point (225) for direct link (215) communications, the second responder station (715, 815) set up with a second group identifier (515) and a second position (520) of the second responder station (520) in said second group (515); and
a transmitter operatively coupled to the processor, wherein the transmitter is configured to transmit to both the first responder station (710, 810) and the second responder station (715, 815) in a first single transmission (600) by means of said direct link (215) communications, the first single transmission (600) includes first information for the first responder station (710, 810) and second information for the second responder station (715, 815), the first information labeled with the first group identifier (515) and located in a first network resource (610-626) corresponding to the first position (520), and the second information labeled with the second group identifier (515) and located in a second network resource (610-626) corresponding to the second position (520).

6. The initiator station (205, 705, 720, 805, 820, 825) of claim 5, wherein, if the first responder station does not accept the first group identifier and the first position, the first TDLS setup response message comprises a first alternate group identifier (515) and a first alternate position (520), and wherein the processor is configured to, if the initiator station does not accept the alternate group identifier and alternate position, select a third group identifier (515) and a third position (520) for the first responder station (710, 810), to configure the first responder station (710, 810) for direct link (215) communications by a third TDLS setup request message, transmitted from the initiator station to the first responder station, including the third group identifier (515) and the third position (520), to replace the first group identifier (515) with the third group identifier (515), and to replace the first position (520) with the third position (520).

7. A first responder station (710, 810) comprising:
a receiver configured to receive a TDLS setup request message to configure direct link (215) communications with an initiator station (205, 705, 720, 805, 820, 825) associated with the same access point (225) as the first responder station (710, 810), said TDLS setup request message including a first group identifier (515) and a first position (520) of the first responder station (710, 810) in said first group (515);
a transmitter configured to transmit a first TDLS setup response message including the first group identifier (515) and the first position (520) if the first group identifier (515) and the first position (520) are not already reserved for use by the first responder station (710, 810); and
a processor operatively coupled to the receiver and to the transmitter, the processor configured to: determine if the first group identifier (515) and the first position (520) are not already reserved for use by the first responder station (710, 810), and accept the first group identifier (515) and the first position (520) if the first group identifier (515) and the first position (520) are not already reserved for use by the first responder station (710, 810), wherein
the receiver is configured to receive, by means of said direct link (215) communications, a first single transmission (600) including first information for the first responder station (710, 810) and second information for a second responder station (715, 815) associated with said access point, the first information labeled with the first group identifier (515) and located in a first network resource (610-626) corresponding to the first position (520).

8. The first responder station (710, 810) of claim 7, wherein the transmitter is configured to transmit a second TDLS setup response message including at least one of an alternate group identifier (515) and an alternate position (520) if the first group identifier (515) and the first position (520) are already reserved for use by the first responder station (710, 810).

## Patentansprüche

1. Verfahren zur Übertragung an eine Mehrzahl von Responder-Stationen (210, 710, 715, 810, 815, 830), wobei das Verfahren Folgendes umfasst:
Einrichten, durch eine mit einem Zugangspunkt (225) assoziierte Initiator-Station (205, 705, 720, 805, 820, 825), einer ersten, mit dem Zugangspunkt (225) assoziierten Responder-Station (710, 810) für Direktverbindungskommunikationen (215) mit einer ersten Gruppenkennung (515) und einer ersten Position (520) der ersten Responder-Station (710, 810) in der ersten Gruppe (515) mittels
Übertragen einer TDLS-Setup-Anforderungsmeldung, aufweisend die erste Gruppenkennung (515) und die erste Position (520), von der Initiator-Station (205, 705, 720, 805, 820, 825) zur ersten Responder-Station (710, 810), und
falls die erste Gruppenkennung (515) und die erste Position (520) nicht bereits zur Verwendung durch die erste Responder-Station (710, 810) reserviert sind, Akzeptieren, durch die erste Responder-Station (710, 810), der ersten Gruppenkennung (515) und der ersten Position (520) und Übertragen einer ersten TDLS-Setup-Antwortmeldung, aufweisend die erste Gruppenkennung (515) und die erste Position (520) von der ersten Responder-Station (710, 810) zur Initiator-Station (205, 705, 720, 805, 820, 825);
Einrichten, durch die Initiator-Station (205, 705, 720, 805, 820, 825), einer zweiten, mit dem Zugangspunkt (225) assoziierten Responder-Station (715, 815) für Direktverbindungskommunikationen (215) mit einer zweiten Gruppenkennung (515) und einer zweiten Position (520) der zweiten Responder-Station (715, 815) in der zweiten Gruppe (515), wobei das Verfahren weiter umfasst:
Übertragen (940, 990) durch die Initiator-Station (205, 705, 720, 805, 820, 825) sowohl an die erste Responder-Station (710, 810) als auch an die zweite Responder-Station (715, 815) in einer ersten einzelnen Übertragung (600) mittels der Direktverbindungskommunikationen (215), wobei die erste einzelne Übertragung (600) erste Informationen für die erste Responder-Station (710, 810) und zweite Informationen für die zweite Responder-Station (715, 815) aufweist, wobei die ersten Informationen mit der ersten Gruppenkennung (515) gekennzeichnet und in einer ersten Netzwerkressource (610-626) positioniert sind, die der ersten Position (520) entspricht, und die zweiten Informationen mit der zweiten Gruppenkennung (515) gekennzeichnet und in einer zweiten Netzwerkeressource (610-626) positioniert sind, die der zweiten Position (520) entspricht.

2. Verfahren nach Anspruch 1, wobei, falls die erste Responder-Station die erste Gruppenkennung und die erste Position nicht akzeptiert, die erste TDLS-Setup-Antwortmeldung eine erste alternative Gruppenkennung (515) und eine erste alternative Position (520) umfasst und wobei, falls die Initiator-Station die alternative Gruppenkennung und die alternative Position nicht akzeptiert, das Verfahren weiter vor dem Übertragen sowohl an die erste Responder-Station (710, 810) als auch an die zweite Responder-Station (715, 815) Folgendes umfasst:
Auswählen einer dritten Gruppenkennung (515) und einer dritten Position (520) durch die Initiator-Station für die erste Responder-Station (710, 810);
Einrichten der ersten Responder-Station (710, 810) durch die Initiator-Station für Direktverbindungskommunikationen (215) mittels Übertragung einer dritten TDLS-Setup-Anforderungsmeldung, aufweisend die dritte Gruppenkennung (515) und die dritte Position (520), durch die Initiator-Station (205, 705, 720, 805, 820, 825) zu der ersten Responder-Station (710, 810), um
die erste Gruppenkennung (515) durch die dritte Gruppenkennung (515) zu ersetzen; und
die erste Position (520) durch die dritte Position (520) zu ersetzen.

3. Verfahren zum Empfangen einer ersten einzelnen Übertragung (600), wobei das Verfahren Folgendes umfasst:
Empfangen (1005) einer TDLS-Setup-Anforderungsmeldung durch eine mit einem Zugangspunkt (225) assoziierte erste Responder-Station (710, 810), aufweisend eine erste Gruppenkennung (515) und eine erste Position (520) der ersten Responder-Station (710, 810) in der ersten Gruppe (515) von einer mit dem Zugangspunkt (225) assoziierten Initiator-Station (205, 705, 720, 805, 820, 825) zum Einrichten von Direktverbindungskommunikationen (215) mit der Initiator-Station (205, 705, 720, 805, 820, 825);
falls die erste Gruppenkennung (515) und die erste Position (520) nicht bereits zur Verwendung durch die erste Responder-Station (710, 810) reserviert sind, Akzeptieren der ersten Gruppenkennung (515) und der ersten Position (520) und Übertragen einer ersten TDLS-Setup-Antwortmeldung durch die erste Responder-Station (710, 810) zu der Initiator-Station (205, 705, 720, 805, 820, 825), aufweisend die erste Gruppenkennung (515) und die erste Position (520); wobei das Verfahren weiter umfasst:
Empfangen der ersten einzelnen Übertragung (600) durch die erste Responder-Station (710, 810), aufweisend erste Informationen für die erste Responder-Station und zweite Informationen für eine zweite Responder-Station (715, 815), wobei die ersten Informationen mit der ersten Gruppenkennung (515) gekennzeichnet und in einer ersten Netzwerkressource (610-626), die der ersten Position (520) entspricht, positioniert sind, mittels der Direktverbindungskommunikationen (215).

4. Verfahren nach Anspruch 3, weiter umfassend das Übertragen einer zweiten TDLS-Setup-Antwortmeldung, aufweisend eine alternative Gruppenkennung (515) und/oder eine alternative Position (520), falls die erste Gruppenkennung (515) und die erste Position (520) bereits zur Verwendung durch die erste Responder-Station (710, 810) reserviert sind.

5. Initiator-Station (205, 705, 720, 805, 820, 825), Folgendes umfassend:
einen Prozessor, dafür ausgelegt, eine erste, mit dem gleichen Zugangspunkt (225) wie die Initiator-Station (205, 705, 720, 805, 820, 825) assoziierte Responder-Station (710, 810) für Direktverbindungskommunikationen (215) einzurichten, wobei die erste Responder-Station (710, 810) mit einer ersten Gruppenkennung (515) und einer ersten Position (520) der ersten Responder-Station (710, 810) in der ersten Gruppe (515) eingerichtet wird, wobei der Prozessor für Folgendes ausgelegt ist:
Übertragen einer TDLS-Setup-Anforderungsmeldung, aufweisend die erste Gruppenkennung (515) und die erste Position (520), von der Initiator-Station (205, 705, 720, 805, 820, 825) zur ersten Responder-Station (710, 810), und
Empfangen einer ersten TDLS-Setup-Antwortmeldung, aufweisend die erste Gruppenkennung (515) und die erste Position (520), von der ersten Responder-Station (710, 810), falls die erste Gruppenkennung (515) und die erste Position (520) nicht bereits zur Verwendung durch die erste Responder-Station (710, 810) reserviert sind und die erste Responder-Station (710, 810) daher die erste Gruppenkennung (515) und die erste Position (520) akzeptiert;
wobei der Prozessor weiter dafür ausgelegt ist, eine zweite, mit dem Zugangspunkt (225) assoziierte Responder-Station (715, 815) einzurichten für Direktverbindungskommunikationen (215), wobei die zweite Responder-Station (715, 815) mit einer zweiten Gruppenkennung (515) und einer zweiten Position (520) der zweiten Responder-Station (520) in der zweiten Gruppe (515) eingerichtet wird; und
einen mit dem Prozessor wirkverbundenen Sender, wobei der Sender dafür ausgelegt ist, sowohl an die erste Responder-Station (710, 810) als auch an die zweite Responder-Station (715, 815) in einer ersten einzelnen Übertragung (600) mittels der Direktverbindungskommunikationen (215) zu senden, wobei die erste einzelne Übertragung (600) erste Informationen für die erste Responder-Station (710, 810) und zweite Informationen für die zweite Responder-Station (715, 815) aufweist, wobei die ersten Informationen mit der ersten Gruppenkennung (515) gekennzeichnet und in einer ersten Netzwerkressource (610-626), die der ersten Position (520) entspricht, positioniert sind und die zweiten Informationen mit der zweiten Gruppenkennung (515) gekennzeichnet und in einer zweiten Netzwerkressource (610-626), die der zweiten Position (520) entspricht, positioniert sind.

6. Initiator-Station (205, 705, 720, 805, 820, 825) nach Anspruch 5, wobei, falls die erste Responder-Station die erste Gruppenkennung und die erste Position nicht akzeptiert, die erste TDLS-Setup-Antwortmeldung eine erste alternative Gruppenkennung (515) und eine erste alternative Position (520) umfasst und wobei der Prozessor dafür ausgelegt ist, falls die Initiator-Station die alternative Gruppenkennung und die alternative Position nicht akzeptiert, eine dritte Gruppenkennung (515) und eine dritte Position (520) für die erste Responder-Station (710, 810) auszuwählen, um die erste Responder-Station (710, 810) für Direktverbindungskommunikationen (215) mittels einer dritten TDLS-Setup-Anforderungsmeldung einzurichten, die von der Initiator-Station zu der ersten Responder-Station übertragen wird, aufweisend die dritte Gruppenkennung (515) und die dritte Position (520), um die erste Gruppenkennung (515) durch die dritte Gruppenkennung (515) zu ersetzen und die erste Position (520) durch die dritte Position (520) zu ersetzen.

7. Erste Responder-Station (710, 810), Folgendes umfassend:
einen Empfänger, dafür ausgelegt, eine TDLS-Setup-Anforderungsmeldung zu empfangen, um Direktverbindungskommunikationen (215) mit einer mit dem gleichen Zugangspunkt (225) wie die erste Responder-Station (710, 810) assoziierten Initiator-Station (205, 705, 720, 805, 820, 825) einzurichten, wobei die TDLS-Setup-Anforderungsmeldung eine erste Gruppenkennung (515) und eine erste Position (520) der ersten Responder-Station (710, 810) in der ersten Gruppe (515) aufweist;
einen Sender, ausgelegt zum Übertragen einer ersten TDLS-Setup-Antwortnachricht, aufweisend die erste Gruppenkennung (515) und die erste Position (520), falls die erste Gruppenkennung (515) und die erste Position (520) nicht bereits zur Verwendung durch die erste Responder-Station (710, 810) reserviert sind; und
einen mit dem Empfänger und mit dem Sender wirkverbunden Prozessor, wobei der Prozessor für Folgendes ausgelegt ist: Bestimmen, ob die erste Gruppenkennung (550) und die erste Position (520) nicht bereits zur Verwendung durch die erste Responder-Station (710, 810) reserviert sind, und Akzeptieren der ersten Gruppenkennung (515) und der ersten Position (520), falls die erste Gruppenkennung (515) und die ersten Position (520) nicht bereits zur Verwendung durch die erste Responder-Station (710, 810) reserviert sind, wobei
der Empfänger dafür ausgelegt ist, mittels der Direktverbindungskommunikation (215) eine erste einzelne Übertragung (600) zu empfangen, aufweisend erste Informationen für die erste Responder-Station (710, 810) und zweite Informationen für eine zweite, mit dem Zugangspunkt assoziierte Responder-Station (715, 815), wobei die ersten Informationen mit der ersten Gruppenkennung (515) gekennzeichnet und in einer ersten Netzwerkressource (610-626), die der ersten Position (520) entspricht, positioniert sind.

8. Erste Responder-Station (710, 810) nach Anspruch 7, wobei der Sender dafür ausgelegt ist, eine zweite TDLS-Setup-Antwortmeldung zu senden, aufweisend eine alternative Gruppenkennung (515) und/oder eine alternative Position (520), falls die erste Gruppenkennung (515) und die erste Position (520) bereits zur Verwendung durch die erste Responder-Station (710, 810) reserviert sind.

## Revendications

1. Procédé d'émission vers une pluralité de stations répondeuses (210, 710, 715, 810, 815, 830), le procédé consistant à :
configurer, par une station d'amorçage (205, 705, 720, 805, 820, 825) associée à un point d'accès (225), une première station répondeuse (710, 810) associée audit point d'accès (225) pour une communication en liaison directe (215), avec un premier identifiant de groupe (515) et une première position (520) de la première station répondeuse (710, 810) dans ledit premier groupe (515), en réalisant les étapes consistant à :
émettre un message de demande d'établissement TDLS incluant le premier identifiant de groupe (515) et la première position (520), de la station d'amorçage (205, 705, 720, 805, 820, 825) à la première station répondeuse (710, 810), et
si le premier identifiant de groupe (515) et la première position (520) ne sont pas déjà réservés en vue d'une utilisation par la première station répondeuse (710, 810), accepter, par la première station répondeuse (710, 810), le premier identifiant de groupe (515) et la première position (520), et émettre un premier message de réponse d'établissement TDLS incluant le premier identifiant de groupe (515) et la première position (520), de la première station répondeuse (710, 810) à la station d'amorçage (205, 705, 720, 805, 820, 825) ;
configurer, par la station d'amorçage (205, 705, 720, 805, 820, 825), une seconde station répondeuse (715, 815) associée audit point d'accès (225) pour une communication en liaison directe (215), avec un deuxième identifiant de groupe (515) et une deuxième position (520) de la seconde station répondeuse (715, 815) dans ledit deuxième groupe (515), le procédé consistant en outre à :
émettre (940, 990), par la station d'amorçage (205, 705, 720, 805, 820, 825), vers la première station répondeuse (710, 810) et vers la seconde station répondeuse (715, 815) dans une première émission unique (600) au moyen de ladite communication en liaison directe (215), la première émission unique (600) incluant une première information pour la première station répondeuse (710, 810) et une seconde information pour la seconde station répondeuse (715, 815), la première information étant étiquetée avec le premier identifiant de groupe (515) et située dans une première ressource de réseau (610-626) correspondant à la première position (520), et
la seconde information étant étiquetée avec le deuxième identifiant de groupe (515) et située dans une seconde ressource de réseau (610-626) correspondant à la deuxième position (520).

2. Procédé selon la revendication 1, dans lequel, si la première station répondeuse n'accepte pas le premier identifiant de groupe et la première position, le premier message de réponse d'établissement TDLS comprend un premier identifiant de groupe alternatif (515) et une première position alternative (520), et le procédé consistant en outre, si la station d'amorçage n'accepte pas l'identifiant de groupe alternatif et la position alternative, avant d'émettre vers la première station répondeuse (710, 810) et vers la seconde station répondeuse (715, 815), à :
sélectionner, par la station d'amorçage, un troisième identifiant de groupe (515) et une troisième position (520) pour la première station répondeuse (710, 810) ;
configurer, par la station d'amorçage, la première station répondeuse (710, 810) pour une communication en liaison directe (215) en émettant, par la station d'amorçage (205, 705, 720, 805, 820, 825), vers la première station répondeuse (710, 810), un troisième message de demande d'établissement TDLS incluant le troisième identifiant de groupe (515) et la troisième position (520), de manière à :
remplacer le premier identifiant de groupe (515) par le troisième identifiant de groupe (515) ; et
remplacer la première position (520) par la troisième position (520).

3. Procédé de réception d'une première émission unique (600), le procédé consistant à :
recevoir (1005), par une première station répondeuse (710, 810) associée à un point d'accès (225), un message de demande d'établissement TDLS incluant un premier identifiant de groupe (515) et une première position (520) de la première station répondeuse (710, 810) dans ledit premier groupe (515) en provenance d'une station d'amorçage (205, 705, 720, 805, 820, 825) associée audit point d'accès (225) pour configurer une communication en liaison directe (215) avec ladite station d'amorçage (205, 705, 720, 805, 820, 825) ;
si le premier identifiant de groupe (515) et la première position (520) ne sont pas déjà réservés en vue d'une utilisation par la première station répondeuse (710, 810):
accepter le premier identifiant de groupe (515) et la première position (520), et
émettre (1015) vers la station d'amorçage (205, 705, 720, 805, 820, 825), par la première station répondeuse (710, 810), un premier message de réponse d'établissement TDLS incluant le premier identifiant de groupe (515) et la première position (520) ; le procédé consistant en outre à :
recevoir, par la première station répondeuse (710, 810), la première émission unique (600) incluant une première information pour la première station répondeuse et une seconde information pour une seconde station répondeuse (715, 815), la première information étant étiquetée avec le premier identifiant de groupe (515) et située dans une première ressource de réseau (610-626) correspondant à la première position (520), au moyen de ladite communication en liaison directe (215).

4. Procédé selon la revendication 3, consistant en outre à émettre un second message de réponse d'établissement TDLS incluant un identifiant de groupe alternatif (515) et/ou une position alternative (520) si le premier identifiant de groupe (515) et la première position (520) sont déjà réservés en vue d'une utilisation par la première station répondeuse (710, 810).

5. Station d'amorçage (205, 705, 720, 805, 820, 825), comprenant :
un processeur configuré pour établir une première station répondeuse (710, 810) associée au même point d'accès (225) que la station d'amorçage (205, 705, 720, 805, 820, 825) pour une communication en liaison directe (215), la première station répondeuse (710, 810) étant établie avec un premier identifiant de groupe (515) et une première position (520) de la première station répondeuse (710, 810) dans ledit premier groupe (515), le processeur étant configuré pour :
émettre un message de demande d'établissement TDLS incluant le premier identifiant de groupe (515) et la première position (520), de la station d'amorçage (205, 705, 720, 805, 820, 825) à la première station répondeuse (710, 810), et
recevoir un premier message de réponse d'établissement TDLS incluant le premier identifiant de groupe (515) et la première position (520) en provenance de la première station répondeuse (710, 810) si le premier identifiant de groupe (515) et la première position (520) ne sont pas déjà réservés en vue d'une utilisation par la première station répondeuse (710, 810), et la première station répondeuse (710, 810) accepte par conséquent le premier identifiant de groupe (515) et la première position (520) ;
le processeur étant en outre configuré pour établir une seconde station répondeuse (715, 815) associée audit point d'accès (225) pour une communication en liaison directe (215), la seconde station répondeuse (715, 815) étant établie avec un deuxième identifiant de groupe (515) et une deuxième position (520) de la seconde station répondeuse (520) dans ledit deuxième groupe (515) ; et
un émetteur couplé de manière fonctionnelle au processeur, l'émetteur étant configuré pour émettre vers la première station répondeuse (710, 810) et vers la seconde station répondeuse (715, 815) dans une première émission unique (600) au moyen de ladite communication en liaison directe (215), la première émission unique (600) incluant une première information pour la première station répondeuse (710, 810) et une seconde information pour la seconde station répondeuse (715, 815), la première information étant étiquetée avec le premier identifiant de groupe (515) et située dans une première ressource de réseau (610-626) correspondant à la première position (520), et la seconde information étant étiquetée avec le deuxième identifiant de groupe (515) et située dans une seconde ressource de réseau (610-626) correspondant à la deuxième position (520).

6. Station d'amorçage (205, 705, 720, 805, 820, 825) selon la revendication 5, dans laquelle, si la première station répondeuse n'accepte pas le premier identifiant de groupe et la première position, le premier message de réponse d'établissement TDLS comprend un premier identifiant de groupe alternatif (515) et une première position alternative (520), et dans laquelle le processeur est configuré pour, si la station d'amorçage n'accepte pas l'identifiant de groupe alternatif et la position alternative, sélectionner un troisième identifiant de groupe (515) et une troisième position (520) pour la première station répondeuse (710, 810), pour configurer la première station répondeuse (710, 810) pour une communication en liaison directe (215) par un troisième message de demande d'établissement TDLS, émis de la station d'amorçage à la première station répondeuse, incluant le troisième identifiant de groupe (515) et la troisième position (520), pour remplacer le premier identifiant de groupe (515) par le troisième identifiant de groupe (515), et pour remplacer la première position (520) par la troisième position (520).

7. Première station répondeuse (710, 810), comprenant :
un récepteur configuré pour recevoir un message de demande d'établissement TDLS pour configurer une communication en liaison directe (215) avec une station d'amorçage (205, 705, 720, 805, 820, 825) associée avec le même point d'accès (225) que la première station répondeuse (710, 810), ledit message de demande d'établissement TDLS incluant un premier identifiant de groupe (515) et une première position (520) de la première station répondeuse (710, 810) dans ledit premier groupe (515) ;
un émetteur configuré pour émettre un premier message de réponse d'établissement TDLS incluant le premier identifiant de groupe (515) et la première position (520) si le premier identifiant de groupe (515) et la première position (520) ne sont pas déjà réservés en vue d'une utilisation par la première station répondeuse (710, 810) ; et
un processeur couplé de manière fonctionnelle au récepteur et à l'émetteur, le processeur étant configuré pour : déterminer si le premier identifiant de groupe (515) et la première position (520) ne sont pas déjà réservés en vue d'une utilisation par la première station répondeuse (710, 810), et accepter le premier identifiant de groupe (515) et la première position (520) si le premier identifiant de groupe (515) et la première position (520) ne sont pas déjà réservés en vue d'une utilisation par la première station répondeuse (710, 810),
le récepteur étant configuré pour recevoir, au moyen de ladite communication en liaison directe (215), une première émission unique (600) incluant une première information pour la première station répondeuse (710, 810) et une seconde information pour une seconde station répondeuse (715, 815) associée audit point d'accès, la première information étant étiquetée avec le premier identifiant de groupe (515) et située dans une première ressource de réseau (610-626) correspondant à la première position (520).

8. Première station répondeuse (710, 810) selon la revendication 7, dans laquelle l'émetteur est configuré pour émettre un second message de réponse d'établissement TDLS incluant un identifiant de groupe alternatif (515) et/ou une position alternative (520) si le premier identifiant de groupe (515) et la première position (520) sont déjà réservés en vue d'une utilisation par la première station répondeuse (710, 810).
